# EUROPEAN PATENT APPLICATION

(11) **EP 3 073 623 A1**
(43) Date of publication of application: **28.09.2016**
(21) Application number: 14885727.9
(22) Date of filing: 23.10.2014
(51) Int. Cl.: H02K 41/03

(54) **LINEAR MOTOR**

(30) Priority: 12.03.2014 JP 2014049304
(71) Applicant: National Institute of Technology, Hachioji-shi, Tokyo 193-0834 (JP); KYB Corporation, Tokyo 105-6111 (JP)
(72) Inventor: KANO, Yoshiaki, Toyota-shi Aichi 471-8525 (JP); SATO, Kousuke, Tokyo 105-6111 (JP); TAKAHASHI, Noriyuki, Tokyo 105-6111 (JP)
(74) Representative: Grünecker Patent- und Rechtsanwälte PartG mbB
(86) International application number: PCT/JP2014/078267
(87) International publication number: WO 2015/136762

(57) **Abstract**

A linear motor includes a tubular yoke and a rod that penetrates the yoke in an axial direction, and is configured to displace the yoke and the rod relative to each other in the axial direction. The linear motor includes a plurality of teeth arranged in the axial direction so as to project in a radial direction from an inner peripheral surface of the yoke, slots formed between adjacent teeth of the plurality of teeth, coils disposed respectively in the slots, and a plurality of permanent magnets held in the rod so as to be arranged in the axial direction. At least one of two slots positioned on outermost sides in the axial direction is configured such that a slow width thereof is narrower than the slot width of the remaining slots.

## Description

### TECHNICAL FIELD

This invention relates to a linear motor.

### BACKGROUND ART

JP2009-254025A discloses a linear motor that displaces a tubular yoke and a rod relative to each other in an axial direction by attracting a permanent magnet disposed on an outer peripheral surface of the rod using a moving magnetic field generated around a coil disposed on an inner peripheral surface of the yoke.

### SUMMARY OF INVENTION

The linear motor is used in an automobile, an aircraft, or the like as a drive source for a driving actuation system or a damping actuation system. It is known that in a linear motor, a detent force (a magnetic attraction force) is generated between the permanent magnets disposed on the rod and teeth formed in the yoke, and that a magnitude of the detent force varies periodically in accordance with relative axial direction positions of the rod and the yoke.

It is desirable for a linear motor of this type to generate a large axial direction thrust and to operate smoothly, but to realize these aims, the detent force generated in the linear motor must be reduced.

An object of this invention is to provide a linear motor in which a detent force can be reduced.

A linear motor according to an aspect of this invention includes a tubular yoke and a rod that penetrates the yoke in an axial direction, and is configured to displace the yoke and the rod relative to each other in the axial direction. The linear motor includes a plurality of teeth arranged in the axial direction so as to project in a radial direction from an inner peripheral surface of the yoke, slots formed between adjacent teeth of the plurality of teeth, coils disposed respectively in the slots, and a plurality of permanent magnets held in the rod so as to be arranged in the axial direction. At least one of two slots positioned on outermost sides in the axial direction is configured such that a slot width thereof is narrower than the slot width of the remaining slots.

### BRIEF DESCRIPTION OF DRAWINGS

FIG. 1 is a schematic view showing a configuration of an actuation system including a linear motor according to an embodiment of this invention.
FIG. 2 is a sectional view showing a part of the linear motor.
FIG. 3 is a view showing an equivalent electric circuit of the linear motor.
FIG. 4 is an enlarged view of a right end of the linear motor.
FIG. 5 is an enlarged view of the right end of a linear motor according to a modified example of this embodiment.

### DESCRIPTION OF EMBODIMENTS

An embodiment of this invention will be described below with reference to the attached figures.

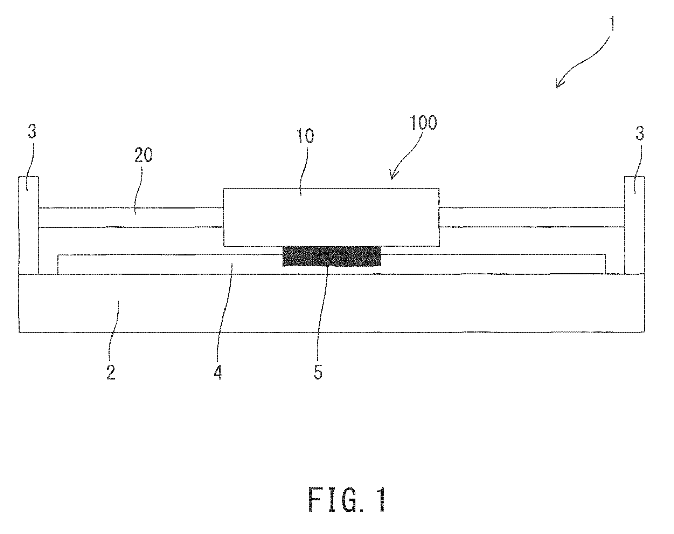

Referring to FIG. 1, an actuation system 1 including a linear motor 100 according to this embodiment of the invention will be described.

The actuation system 1 includes the linear motor 100, which includes a yoke 10 and a rod 20, a carrying portion 2 on which the linear motor 100 is carried, a support portion 3 erected on the carrying portion 2 to support respective ends of the rod 20, a rail 4 disposed on the carrying portion 2, and a carrier 5 that moves along the rail 4 while the yoke 10 is fixed thereto. When the linear motor 100 is driven, the yoke 10 moves along the rail 4 together with the carrier 5. In the actuation system 1, a driving subject such as a component is mounted on the yoke 10 so that the driving subject can be moved in a straight line.

It should be noted that although the actuation system 1 is configured as a driving actuation system for driving the driving subject, the actuation system 1 is not limited to this configuration. By attaching the yoke 10 of the linear motor 100 to one of two members that are displaced relative to each other and attaching the rod 20 of the linear motor 100 to the other member, the actuation system 1 may be configured as a damping actuation system that suppresses the relative displacement between the two members.

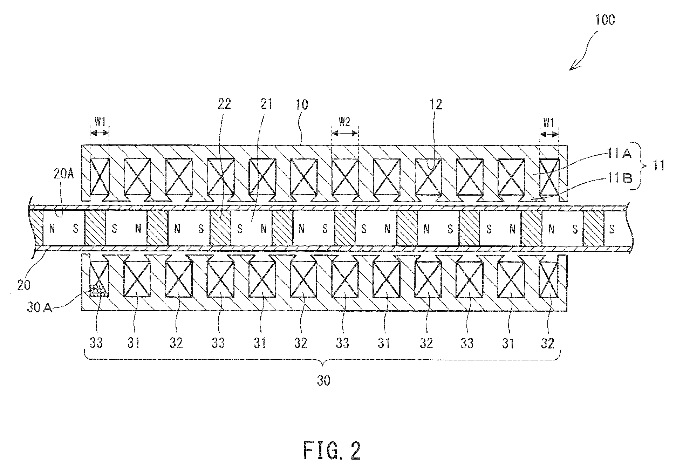

Next, referring to FIG. 2, a configuration of the linear motor 100 that serves as a drive source of the actuation system 1 will be described.

The linear motor 100 is configured as an eight-pole, twelve-slot linear motor. The linear motor 100 includes the tubular yoke 10, the rod 20 that penetrates the interior of the yoke 10 in a yoke axis direction, a plurality of coils 30 provided in the yoke 10, and a plurality of permanent magnets 21 held in the rod 20. In the linear motor 100, thrust for displacing the yoke 10 and the rod 20 relative to each other in an axial direction is generated by attracting the permanent magnets 21 held in the rod 20 using a moving magnetic field that is generated around the coils 30 when an alternating current is passed through the coils 30.

The yoke 10 is a cylindrical member formed from a magnetic material such as soft iron. The yoke 10 includes teeth 11 arranged in the axial direction so as to project toward a yoke center from an inner peripheral surface thereof. Thirteen teeth 11 are arranged in the axial direction and disposed at predetermined intervals between respective ends of the yoke 10.

Each one of eleven teeth 11 (referred to hereafter where necessary as center side teeth 11) positioned in positions other than the respective ends of the yoke 10 includes an upright portion 11A that stands upright from the inner peripheral surface of the yoke 10 and extends in an inner peripheral direction, and a tip end portion 11B provided on a tip end of the upright portion 11A. An end surface of the tip end portion 11 B of the tooth 11 is configured to oppose an outer peripheral surface of the rod 20. A width (a thickness in the yoke axis direction) of the tip end portion 11B is set to be larger than a width (a thickness in the yoke axis direction) of the upright portion 11A. Further, the width of the tip end portion 11B is formed to increase gradually toward the yoke center.

The two teeth 11 (referred to hereafter where necessary as outside teeth 11) positioned on outermost sides of the yoke 10 in the axial direction are disposed at the respective ends of the yoke 10. The outside teeth 11 each include only the upright portion 11A, and the tip end portion 11B is not provided on the tip end thereof. Hence, the outside teeth 11 are formed as disc-shaped flat plate members having a constant width from a base (a side near the inner peripheral surface of the yoke 10) to the tip end. In the outside teeth 11, a tip end surface of the upright portion 11A opposes the outer peripheral surface of the rod 20.

Spaces between adjacent teeth 11, 11 in the axial direction are formed as annular grooves constituting slots 12 in which the coils 30 are disposed. In the linear motor 100, thirteen teeth 11 are provided, and therefore the number of slots 12 is twelve. One coil 30 is disposed in each slot 12.

In the linear motor 100, the two slots 12 positioned on the outermost sides of the yoke 10 in the axial direction, or in other words at the respective ends of the yoke 10, are configured such that a width W1 thereof is narrower than a width W2 of the remaining ten slots 12. Hereafter, where necessary, the narrow slots 12 will be referred to as outside slots 12 and the wide slots 12 will be referred to as center side slots 12.

The coils 30 are provided in a number corresponding to the number of slots, i.e. twelve. The twelve coils 30 are constituted by four U phase coils 31, four V phase coils 32, and four W phase coils 33.

The coils 31, 32, 33 of the respective phases are formed in a ring shape by winding insulation-coated winding wires 30A around the rod 20. It should be noted that, in FIG. 2, only a part of the winding wire 30A of one W phase coil 33 is shown and all other parts are omitted.

Further, the coils 31, 32, 33 of the respective phases are disposed alternately, one phase at a time, in order of the W phase coil 33, the U phase coil 31, and the V phase coil 32 from the left end side slot 12 toward the right end side slot 12.

Although the slot width W1 of the outside slots 12 is narrower than the width W2 of the center side slots 12, a number of windings of the winding wires 30A of the coils 32, 33 disposed in the outside slots 12 is set to be identical to the number of windings of the winding wires 30A of the coils 31, 32, 33 disposed in the center side slots 12.

The rod 20 is a cylindrical member disposed coaxially with the yoke 10 and formed from a non-magnetic material such as stainless steel. The rod 20 includes a through hole 20A that penetrates the rod 20 in the axial direction. As shown in FIG. 1, respective ends of the rod 20 are fixed to the support portion 3 provided on the carrying portion 2.

As shown in FIG. 2, the plurality of permanent magnets 21 are held in the through hole 20A in the rod 20 so as to be arranged in the axial direction. The permanent magnets 21 are formed in a columnar shape and polarized so that an N pole and an S pole occur in the axial direction. The permanent magnets 21 are provided at equal intervals, and adjacent permanent magnets 21 are disposed so that identical poles face each other. Further, columnar yokes 22 formed from a magnetic material are provided between adjacent permanent magnets 21, 21.

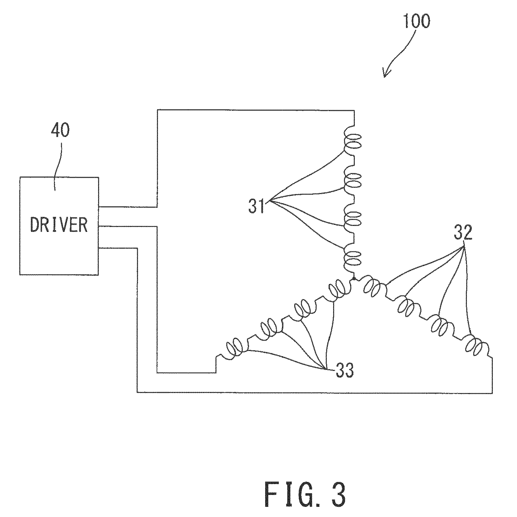

As shown in FIG. 3, in the linear motor 100, the four U phase coils 31 are connected in series. Similarly, the four V phase coils 32 and the four W phase coils 33 are respectively connected in series. Respective end portions of the U phase coil 31, the V phase coil 32, and the W phase coil 33 on a tip end side are Y-connected, while respective end portions of the U phase coil 31, the V phase coil 32, and the W phase coil 33 on a rear end side are connected to a driver 40.

The driver 40 is configured as a control device that controls the supply of the alternating current to the U phase coils 31, V phase coils 32, and W phase coils 33. The driver 40 controls a frequency, an energization timing, and so on of the alternating current on the basis of information indicating relative positions of the yoke 10 and the rod 20, these relative positions being detected by a position sensor not shown in the figures. As a result, the thrust generated by the linear motor 100 and a thrust generation direction are adjusted, whereupon the yoke 10 and the rod 20 are moved relative to each other in a straight line by the adjusted thrust.

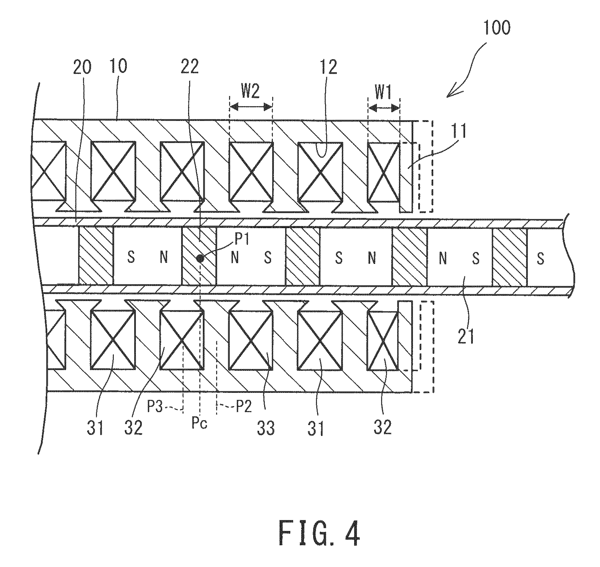

Next, referring to FIG. 4, a detent force generated by the linear motor 100 will be described.

When magnetic flux generated from the permanent magnets 21 disposed in the rod 20 acts on the teeth 11, a detent force is generated between the columnar yokes 22, which function as magnetic poles, and the teeth 11. The detent force acts as resistance to movement of the yoke 10. A magnitude of the detent force varies periodically in accordance with the relative axial direction positions of the rod 20 and the yoke 10.

In the eight-pole, twelve-slot linear motor 100, the detent force reaches a maximum when a positional relationship shown in FIG. 4 is established between the rod 20 and the yoke 10, or in other words when a central position P1 of the columnar yoke 22 is aligned with an intermediate position Pc between a central position P2 of the fourth tooth 11 from the right side and a central position P3 of the fourth slot 12 from the right side.

In the linear motor 100, the width W1 of the slots 12 positioned at the respective ends of the yoke 10 is set to be narrower than the width W2 of the remaining slots 12, and therefore the teeth 11 positioned at the respective ends of the yoke 10 are positioned further inward than teeth (see dotted line in FIG. 4) at respective ends of a conventional linear motor in which all of the slots are set to have the same width W2. Hence, when the positional relationship at which the detent force reaches a maximum is established between the rod 20 and the yoke 10, as shown in FIG. 4, the central positions of the columnar yokes in the conventional linear motor are located in intermediate positions between the teeth (dotted lines) at the respective ends and the slots, whereas in the linear motor 100, the central positions of the columnar yokes 22 deviate from the intermediate positions between the teeth 11 at the respective ends and the slots 12.

When the central positions of the columnar yokes 22 deviate from the intermediate positions between the teeth 11 on the outermost sides and the slots 12 in this manner, magnetic flux generated from the permanent magnets 21 near the yoke ends is less likely to flow into the outside teeth 11. With the linear motor 100, therefore, an amount of magnetic flux flowing into the teeth 11 positioned at the respective ends of the yoke 10 can be reduced, and as a result, the maximum value of the detent force can be reduced in comparison with the conventional linear motor.

It should be noted that in the linear motor 100, the columnar yokes 22 do not necessarily have to be provided, and instead the permanent magnets 21 may be provided directly adjacent to each other. Likewise in a case where the columnar yokes 22 are omitted, when the positional relationship shown in FIG. 4 is established between the rod 20 and the yoke 10, end portions (magnetic poles) of the permanent magnets 21 deviate from the intermediate positions between the teeth 11 on the outermost sides and the slots 12, and therefore the amount of magnetic flux flowing into the teeth 11 at the respective ends is reduced.

With the linear motor 100 according to this embodiment, described above, following effects can be obtained.

In the linear motor 100, the width W1 of the two slots 12 positioned on the outermost sides in the axial direction is set to be narrower than the width W2 of the remaining slots 12. Hence, when the positional relationship at which the detent force reaches a maximum is established between the rod 20 and the yoke 10, as shown in FIG. 4, the magnetic poles (the columnar yokes 22) of the permanent magnets 21 near the yoke ends deviate from the intermediate positions between the central positions of the teeth 11 positioned at the respective ends of the yoke 10 and the central positions of the slots 12. With the linear motor 100, therefore, the amount of magnetic flux flowing into the teeth 11 positioned on the outermost sides from the permanent magnets 21 near the yoke ends can be reduced, the maximum value of the detent force in comparison with the conventional linear motor described above can be reduced. As a result, the linear motor 100 can be operated smoothly.

It should be noted that in the linear motor 100, the width of the two slots 12 positioned on the outermost sides in the axial direction is narrowed, but instead, the width of only one of the two slots 12 positioned on the outermost sides in the axial direction may be narrowed.

Further, in the linear motor 100, the number of windings of the winding wires 30A of the coils 32, 33 disposed in the slots 12 on the outermost sides is set to be identical to the number of windings of the winding wires 30A of the coils 31, 32, 33 disposed in the center side slots 12. When the number of windings of the coils in the slots on the outermost sides is reduced in accordance with a capacity of the slots having the reduced width, the amount of thrust generated by the linear motor decreases. In the linear motor 100, however, the number of windings of the coils 32, 33 in the slots 12 on the outermost sides is set to be identical to the number of windings of the remaining coils 31, 32, 33, and therefore a reduction in thrust can be suppressed.

Furthermore, in the linear motor 100, the teeth 11 positioned on the outermost sides are formed as disc-shaped flat plate members including only the upright portion 11A, and therefore the amount of magnetic flux flowing into the teeth 11 positioned on the outermost sides from the permanent magnets 21 can be reduced in comparison with the teeth 11 including the tip end portion 11B that is formed to increase gradually in width from the upright portion 11A. As a result, the detent force generated at the respective ends of the yoke 10 can be reduced.

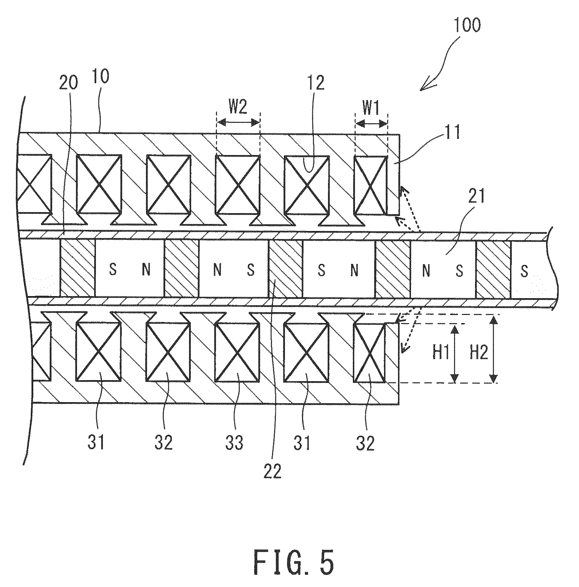

Next, referring to FIG. 5, the linear motor 100 according to a modified example of this embodiment will be described.

In the linear motor 100 according to the modified example shown in FIG. 5, a projection amount H1 by which the teeth 11 positioned on the outermost sides project from the yoke inner peripheral surface is set to be smaller than a projection amount H2 of the center side teeth 11.

By configuring the teeth 11 positioned at the respective ends of the yoke 10 in this manner, an air gap between the tip ends of the teeth 11 and the rod 20 increases, and a surface area of side faces of the teeth 11 decreases. Accordingly, the amount of magnetic flux (see dotted line arrows in FIG. 5) flowing from the permanent magnets 21 near the yoke ends to the tip ends and side faces of these teeth 11 can be reduced. As a result, the detent force generated at the respective ends of the yoke 10 can be reduced even further, whereby the linear motor 100 can be operated even more smoothly.

In the linear motor 100 according to the modified example, it is preferable to set only the projection amount H1 of the outside teeth 11 to be small, and to set the projection amount H2 of the center side teeth 11 to be as large as possible and to be equal among the center side teeth 11. By setting the projection amounts H1, H2 of the teeth 11 in this manner, the thrust can be kept substantially equal to that of the conventional linear motor while reducing the detent force generated at the respective ends of the yoke 10.

An embodiment of the present invention was described above, but the above embodiment is merely one example of an application of the present invention, and the technical scope of the present invention is not limited to the specific configurations of the above embodiment.

The linear motor 100 according to this embodiment is an eight-pole, twelve-slot type linear motor in which eight permanent magnets 21 and twelve slots 12 are provided in the yoke 10, but the linear motor 100 is not limited to this configuration, and may be configured as a linear motor having other numbers of poles and slots.

Moreover, in the linear motor 100, the plurality of permanent magnets 21 are fixed in the through hole 20A of the rod 20 so as to be arranged in the axial direction, but the permanent magnets 21 are not limited to this arrangement. For example, the permanent magnets 21 may be formed in a ring shape and fitted externally to an outer periphery of the rod 20, and the plurality of permanent magnets 21 may be arranged in the axial direction so as to oppose the tip ends of the teeth 11.

This application claims priority based on Japanese Patent Application No. 2014-49304, filed with the Japan Patent Office on March 12, 2014, the entire contents of which are incorporated into this specification by reference.

## Claims

1. A linear motor that includes a tubular yoke and a rod that penetrates the yoke in an axial direction, and is configured to displace the yoke and the rod relative to each other in the axial direction, comprising:
a plurality of teeth arranged in the axial direction so as to project in a radial direction from an inner peripheral surface of the yoke;
slots formed between adjacent teeth of the plurality of teeth;
coils disposed respectively in the slots; and
a plurality of permanent magnets held in the rod so as to be arranged in the axial direction,
wherein at least one of two slots positioned on outermost sides in the axial direction is configured such that a slot width thereof is narrower than the slot width of the remaining slots.

2. The linear motor as defined in Claim 1, wherein a number of windings of the coils disposed in the slots having the narrow slot width is set to be identical to the number of windings of the coils disposed in the slots having the wide slot width.

3. The linear motor as defined in Claim 1, wherein the teeth positioned on the outermost sides in the axial direction so as to form the slots having the narrow slot width are configured such that a projection amount thereof is smaller than a projection amount of the remaining teeth.

4. The linear motor as defined in Claim 1, wherein the teeth positioned on the outermost sides in the axial direction so as to form the slots having the narrow slot width each comprise an upright portion that stands upright in the radial direction from the inner peripheral surface of the yoke, and
the other teeth each comprise the upright portion that stands upright in the radial direction from the inner peripheral surface of the yoke, and a tip end portion provided on a tip end of the upright portion, a width of the tip end portion being larger than a width of the upright portion.
